# EUROPÄISCHE PATENTSCHRIFT

(11) **EP 2 494 894 B1**
(45) Veröffentlichungstag und Bekanntmachung des Hinweises auf die Patenterteilung: **26.08.2015**
(21) Anmeldenummer: 12001254.7
(22) Anmeldetag: 25.02.2012
(51) Int. Cl.: A47J 31/44, A47J 47/16, A47B 49/00, A47F 5/02

(54) **Halter für Kapseln**
Holder for capsules
Support pour capsules

(30) Priorität: 03.03.2011 DE 102011012888
(43) Veröffentlichungstag der Anmeldung: 05.09.2012
(73) Patentinhaber: Bertele, Jürgen, 9434 Au (CH)
(72) Erfinder: Bertele, Jürgen, 9434 Au (CH)
(74) Vertreter: Riebling, Peter

(56) Entgegenhaltungen:
- GB-A- 700 951
- US-A- 3 921 948
- US-A1- 2010 089 848
- US-S1- D 621 640

## Beschreibung

Gegenstand der Erfindung ist ein Halter für Kapseln nach dem Oberbegriff des Patentanspruches 1, wie z.B. aus der US 3 921 948 A1 bekannt.

Unter einem Halter für Kapseln wird eine Vorrichtung verstanden, mit der es möglich ist, eine Vielzahl von annähernd eine gleiche Formgebung aufweisenden Kapseln klemmend zu halten. Solche Kapseln sind insbesondere Kapseln, in denen Kaffeepulver enthalten ist, aber auch Kapseln, in denen Milch oder andere Stoffe enthalten sind. Eine solche Vorrichtung soll eine leichte Auswahl von verschiedenartigen Kapseln ermöglichen, die in dem Halter leicht entnehmbar geklemmt sind. Er wird beispielsweise in der Nähe einer Kaffeemaschine aufgestellt, in der zur Zubereitung eines Heißgetränks, solche Kapseln eingelegt und verarbeitet werden.

Bei den Kapseln handelt es sich grundsätzlich um rotationssymmetrische, kleine Behälter, die bevorzugt aus einer Aluminium- oder Kunststofffolie geformt sind und die einen aufreißbaren oder durchstoßbaren Deckel aufweisen, der ebenfalls bevorzugt aus einer Kunststofffolie oder einer Aluminiumfolie gebildet ist.

Wenn in der folgenden Erfindungsbeschreibung nur noch auf eine Kapsel Bezug genommen wird, in der Kaffeepulver enthalten ist, so ist dies nicht einschränkend zu verstehen, sondern dient nur der einfacheren Beschreibung.

Es ist bekannt, derartige Kapseln in einem oben offenen, etwa zylinderförmigen Halter aufzubewahren, wobei die Kapseln in rinnenförmigen Aufnahmen des rotationssymmetrischen Behälters aufgenommen sind, so dass sie stapelweise übereinander liegen. Hierbei besteht der Nachteil, dass jeweils nur die oberste oder je nachdem, ob die Entnahmeöffnung oben oder unten angeordnet ist, bei Bedarf auch die unterste Kapsel aus dem Stapel entnommen werden kann.

Die darüber oder darunter im vertikalen Stapel liegenden Kapseln können nicht entnommen werden. Dadurch wird die individuelle Zugänglichkeit einzelner - möglicherweise Sorten-verschiedener - Kapseln stark eingeschränkt, denn bei solchen Haltern ist es deshalb nur möglich, beispielsweise in der einen rinnenförmigen, vertikalen Aufnahme die Kapseln der einen Sorte und in der benachbarten rinnenförmigen, vertikal gerichteten Aufnahme die Kapseln der anderen Sorte anzuordnen.

Der Erfindung liegt deshalb die Aufgabe zugrunde, einen Halter für Kapseln der eingangs genannten Art so weiterzubilden, dass eine individuelle Zugänglichkeit für jede einzelne, dort aufgenommene Kapsel gegeben ist und dass ein besonders platzsparender Aufbau gewährleistet ist.

Zur Lösung der gestellten Aufgabe ist die Erfindung durch die technische Lehre des Anspruches 1 gekennzeichnet.

Jeder Kapsel ist ein Kapselhalter zugeordnet, der aus zwei Halbfedern besteht, die eine Klemmaufnahme bilden und wobei die zu haltende Kapsel mit ihrem Rand in die Klemmaufnahme einschiebbar und dort klemmend gehalten ist.

Es kann auch vorgesehen sein, dass die beiden Halbfedern zu einer einzigen, zusammen hängenden Feder vereinigt sind und diese Feder dann die miteinander zusammen hängenden (aus einem zusammen hängenden Federdraht gebildeten) Halbfedern ausbildet. Es kann jedoch auch vorgesehen sein, dass mehr als zwei - nicht zusammenhängende - Halbfedern vorhanden sind. Der einfacheren Beschreibung wegen wird in der folgenden Beschreibung von zwei nicht zusammen hängenden Halbfedern ausgegangen, die demgemäß aus zwei nicht zusammenhängenden Federdrähten gebildet sind.

Mit der gegebenen technischen Lehre ergibt sich der Vorteil, dass nun erstmals jeder einzelnen Kapsel ein Kapselhalter zugeordnet ist und dass jeder Kapselhalter jeweils aus zwei sich zueinander ergänzenden und symmetrisch ausgebildeten Halbfedern besteht, die zusammen eine stirnseitig etwa offene Klemmaufnahme bilden, so dass in die offene Klemmaufnahme die Kapsel mit ihrem umlaufenden Rand einschiebbar ist und den Kapselrand klemmend aufnimmt.

Hierbei besteht der besondere Vorteil, dass die Kapsel in der Klemmaufnahme nur mit ihrem umlaufenden Rand gehalten wird und dass im Wesentlichen keine anderen Teile des Kapselhalters zur Halterung der Kapsel herangezogen werden. Dadurch ist der Klemmhalter unabhängig von der Kapselform (Höhe, Breite und Formgebung), weil die Kapsel lediglich am Umfang geklemmt ist.

Damit können unterschiedlich geformte - auch asymmetrische - Kapseln individuell gehalten werden und die Klemmaufnahme passt sich in ihrer Breite durch die verwendeten, sich gegenseitig ergänzenden Federelemente an unterschiedliche Durchmesser der Kapseln an.

Dadurch ergibt sich eine besonders einfache Konstruktion, und durch die Beschränkung der klemmenden Halterung auf den Kapselrand ist es nun erstmals möglich, Kapseln unterschiedlichen Durchmessers zu halten, wobei auch Kapseln unterschiedlicher Höhe oder unterschiedlicher Breite gehalten werden können, weil eben nur der umlaufende Kapselrand der Kapsel seitlich in der Klemmaufnahme klemmend aufgenommen ist.

Durch die Tatsache, dass der Kapselhalter aus zwei sich einander ergänzenden Halbfedern besteht, die eine große, vordere Einführöffnung ausbilden, in welche dann der Kapselrand der Kapsel klemmend aufgenommen wird, ergibt sich der Vorteil, dass jeder Kapsel ein eigener Kapselhalter zugeordnet ist, so dass jede Kapsel individuell herausgenommen werden kann und ferner, dass unterschiedliche Kapseln mit unterschiedlichem Durchmessern, Höhen und Aufbau klemmend gehalten werden können. Die klemmende Halterung ist so ausgebildet, dass die Kapsel gegen Herausrutschen absolut gesichert ist, sie kann auch leicht eingeführt werden und wird dann gegen Herausfallen durch die Klemmhalterung gesichert.

Erst wenn man die Kapsel herausziehen will, muss die Klemmhalterung entgegen der Federkraft der einander sich ergänzenden Halbfedern geöffnet werden, wodurch dann unter Überwindung der Federkraft der beiden Halbfedern die Kapsel aus der Klemmhalterung herausgezogen werden kann.

Bei der vorliegenden Erfindung ergibt sich der Vorteil, dass der Kapselhalter, bestehend aus den beiden sich gegenseitig ergänzenden Halbfedern, welche die Klemmaufnahme bilden, nun an unterschiedlichen Vorrichtungen befestigt werden kann.

Solche Klemmaufnahmen können ortfest an beliebigen Gegenständen befestigt werden, jedoch auch an hierfür vorgesehenen Haltegestellen, die bevorzugt drehbar ausgebildet sind.

Es ist vorgesehen, dass die Kapselhalter an einer Vorrichtung mit daran befestigten Haltestangen befestigt sind, welche Haltestangen in einem vertikalen Aufbau der Vorrichtung angeordnet sind und zwischen zwei im Abstand voneinander angeordneten und parallel zueinander ausgebildeten Halteplatten eingesetzt sind.

Die Halteplatten werden gegenseitig auf Abstand durch dazwischen angeordnete Verbindungsstangen gehalten, und in diesem Aufbau sind die Haltestangen angeordnet, wobei jeweils die Haltestangen paarweise angeordnet sind und jede Halbfeder sich sowohl um die eine Haltestange als auch um die andere Haltestange herum schlingt, so dass jede Halbfeder einen absolut sicheren und verschiebungsfesten Sitz an beiden paarweise und parallel zueinander angeordneten Haltestangen findet.

Auf diese Weise ist es möglich, eine Vielzahl von Kapselhaltern im engen Abstand übereinander auf engstem Raum anzuordnen, weil praktisch keine dazwischen liegenden Wände, Verbindungsteile oder dergleichen notwendig sind. Die Kapselhalter schweben sozusagen in ihren Klemmhalterungen, die ringsum laufend gleichmäßig verteilt am Umfang einer derartigen Vorrichtung angeordnet sind. Die Vorrichtung ist bevorzugt drehbar ausgebildet, sodass durch die Drehung jede Kapsel in jede beliebige Entnahmestellung bringbar ist.

In einem bevorzugten Ausführungsbeispiel sind in einem Aufbau einer Vorrichtung von z. B. 20 cm Höhe 7 übereinander liegende Ebenen für dort angeordnete Klemmhalterungen angeordnet, wobei bezüglich jeder Ebene am Umfang verteilt 6 derartige Klemmhalterungen vorgesehen sind. Hieraus ergeben sich 42 Klemmhalterungen für die einen geringen Raumbedarf einnehmende Vorrichtung.

In einer bevorzugten Ausgestaltung bestehen die Halbfedern aus einem geeigneten Federstahlmaterial, welches eine Vielzahl von wiederkehrenden Biegevorgängen ohne Bruchgefahr aushält.

Die Biegefedern haben bevorzugt eine Stärke von z. B. 1,2 mm, worauf jedoch die Erfindung nicht beschränkt ist. Es können auch stärkere oder schwächere Biegefedern verwendet werden. In einer bevorzugten Ausgestaltung sind die Biegefedern aus einem rund profilierten Federdraht ausgebildet, worauf die Erfindung jedoch nicht beschränkt ist. Anstatt rund profilierter Biegefedern können auch anders profilierte Biegefedern verwendet werden, insbesondere aus Flachmaterial, Ovalmaterial oder dergleichen mehr.

Die Erfindung ist auch nicht auf die Ausbildung von Klemmhalterungen aus Biegefedern aus einem Federdraht beschränkt. Ebenso können in einer anderen Ausgestaltung die Biegefedern aus Kunststofffedern ausgebildet sein.

Vorstehend wurde ausgeführt, dass jeder Kapselhalter aus 2 sich symmetrisch zueinander ergänzenden Halbfedern besteht, wobei die Halbfedern eine stirnseitig offene Klemmhalterung bilden, in welche dann der umlaufende Rand einer Kapsel eingeschoben wird und dort klemmend gehalten ist.

Hierbei ist wesentlich, dass die Halbfedern jeweils über 2 Haltestangen, die in gegenseitigem Abstand und parallel zueinander angeordnet sind, geführt und befestigt sind weil sich hierdurch die Möglichkeit bietet, dass sich die zu den Haltestangen erstreckenden Federschenkel der beiden Halbfedern kreuzen, übereinander liegen und sich gegenseitig abstützen. Auf diese Weise werden die Halbfedern verdreh-gesichert und kippsicher zwischen den parallelen und paarweise angeordneten Haltestangen aufgenommen.

Die Erfindung ist nicht darauf beschränkt, die erfindungsgemäßen Kapselhalter in einer turmartigen Vorrichtung (turmartigen Gestell) anzuordnen. Es kann ebenso vorgesehen sein, dass die erfindungsgemäßen Kapselhalter in einer scheibenförmigen Vorrichtung angeordnet sind, d. h. es ist nur eine einzige Ebene von Kapselhaltern vorhanden, die in einer scheibenförmigen Ebene angeordnet sind und gleichmäßig verteilt am Umfang lediglich in einer Ebene montiert sind.

In einer anderen Ausgestaltung kann es vorgesehen sein, dass die Kapselhalter nur in einer einzigen vertikalen Spalte in einer Vorrichtung angeordnet sind, so dass es sich nicht um einen rotationssymmetrischen, sondern um einen asymmetrischen Aufbau handelt.

Die Erfindung sieht demgemäß verschiedene Möglichkeiten vor, in welcher Weise die Kapselhalter angeordnet sind, nämlich ob sie vertikal übereinander und nebeneinander liegend in verschiedenen Ebenen einen turmartigen Aufbau bilden oder ob sie - in der zweiten Ausführungsform - lediglich in einer einzigen Ebene nebeneinander liegend angeordnet sind.

Wenn es um einen turmartigen Aufbau geht, dann ist vorgesehen, dass der turmartige Aufbau entweder als vertikal aufrecht stehendes Gestell Bei diesem turmartigen Aufbau wird es bevorzugt, wenn der Aufbau drehbar auf einer Grundplatte angeordnet ist, weil sich dann die Möglichkeit bietet, von einer einzigen Zugriffsrichtung aus eine Vielzahl von im Halter klemmend gehaltenen Kapseln von einer einzigen Richtung zugänglich zu machen.

Die Drehlagerung eines solchen Aufbaus kann dann mit einer mechanischen oder magnetischen Rastung ausgebildet werden, um so eine bestimmte Drehlage zu arretieren und nur bei bestimmten Drehschritten einen anderen Halter in den Zugriffsbereich der Hand zu bringen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Seitenansicht eines Halters für Kapseln mit einer Vielzahl von übereinander und nebeneinander angeordneten Kapselhaltern
- Figur 2:: eine gegenüber Figur 1 abgewandelte Ausführungsform mit einem liegend angeordneten Halter
- Figur 3:: die gleiche Darstellung wie Figur 2 aus einem anderen Blickwinkel
- Figur 4:: eine gegenüber Figur 1 bis 3 abgewandelte Ausführungsform mit einem schräg angeordneten Halter für Kapseln
- Figur 5:: die Draufsicht auf die erste Halbfeder, die Teil des Kapselhalters ist
- Figur 6:: die Draufsicht auf die zweite Halbfeder, die zusammen mit der ersten Halbfeder nach Figur 5 den Kapselhalter ausbildet
- Figur 7:: die Seitenansicht der Halbfeder nach Figur 5
- Figur 8:: die Stirnansicht eines Kapselhalters mit eingeschobener Kapsel
- Figur 9:: die Seitenansicht der Anordnung nach Figur 8 mit eingeschobener Kapsel
- Figur 10:: die Draufsicht auf die Anordnung nach Figur 9 mit eingeschobener und klemmend gehaltener Kapsel
- Figur 11:: die perspektivische Darstellung einer Klemmhalterung
- Figur 12:: die Stirnansicht der Klemmhalterung nach Figur 11
- Figur 13:: Horizontalschnitt durch die Klemmvorrichtung nach Figur 1

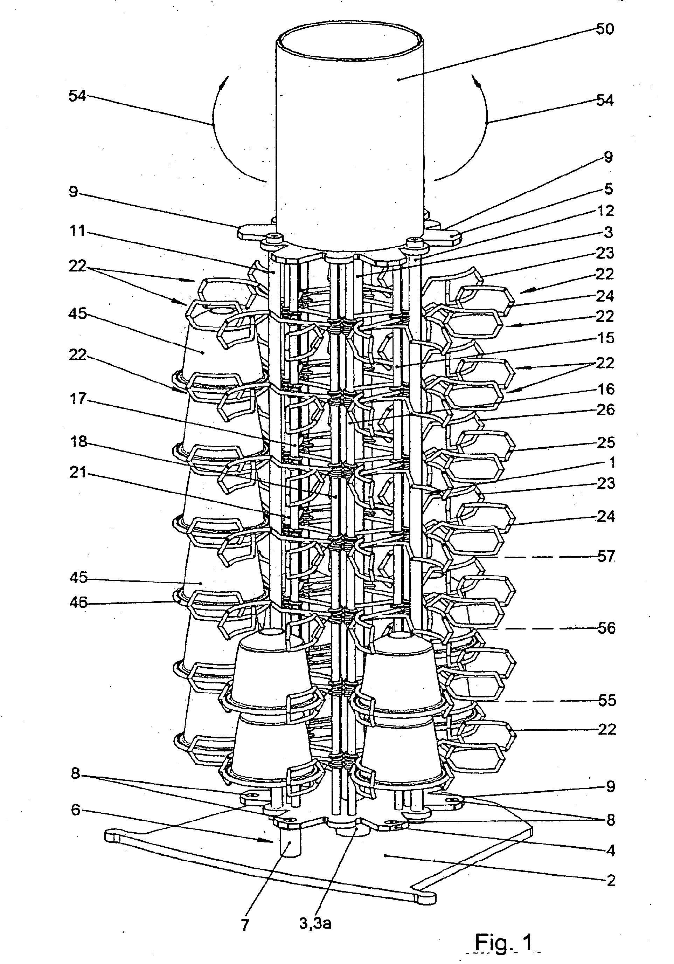

In den Figuren 1 bis 3 sind unterschiedliche Gestelle 1, 10, 20 von Haltern für Kapseln 45 gezeigt, die alle den gleichen Aufbau haben, jedoch auf einer Grundplatte 2 in unterschiedlicher Weise gelagert und dort drehbar gehalten sind.

Beispielsweise ist in Figur 1 dargestellt, dass der gesamte Aufbau des Gestells 1 sich auf der Grundplatte 2 in den Pfeilrichtungen 54 um eine zentrale Mittelachse 3 drehend bewegen kann und hierbei auch eine Drehrastung vorgesehen ist.

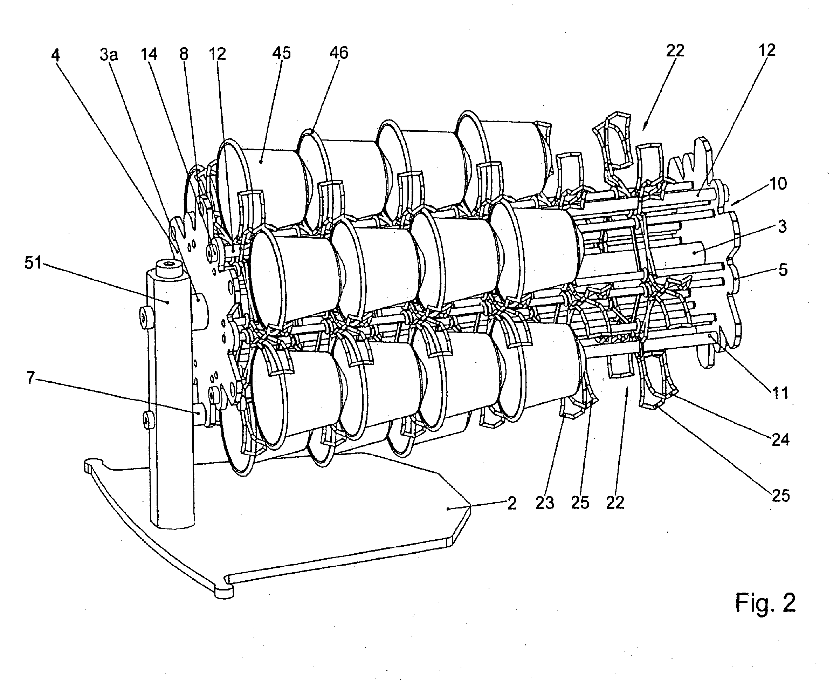

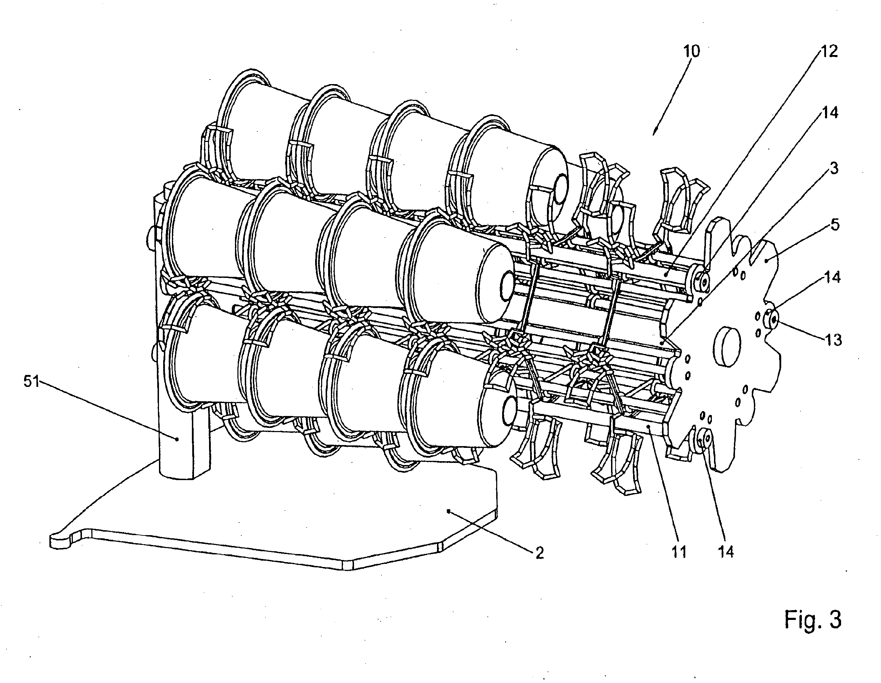

Das Gestell 10 nach Figuren 2 und 3 ist genau gleich wie das Gestell 1 ausgebildet, so dass für die gleichen Teile auch die gleichen Bezugszeichen gelten. Der Drehaufbau des Gestells 10 ist jedoch so ausgerichtet, dass die Mittelachse 3 liegend ausgebildet ist und hierbei drehbar in einem aufrecht stehenden Haltefuß 51 gelagert ist, wobei der Drehlagerung wiederum eine Rastvorrichtung 6 zugeordnet ist.

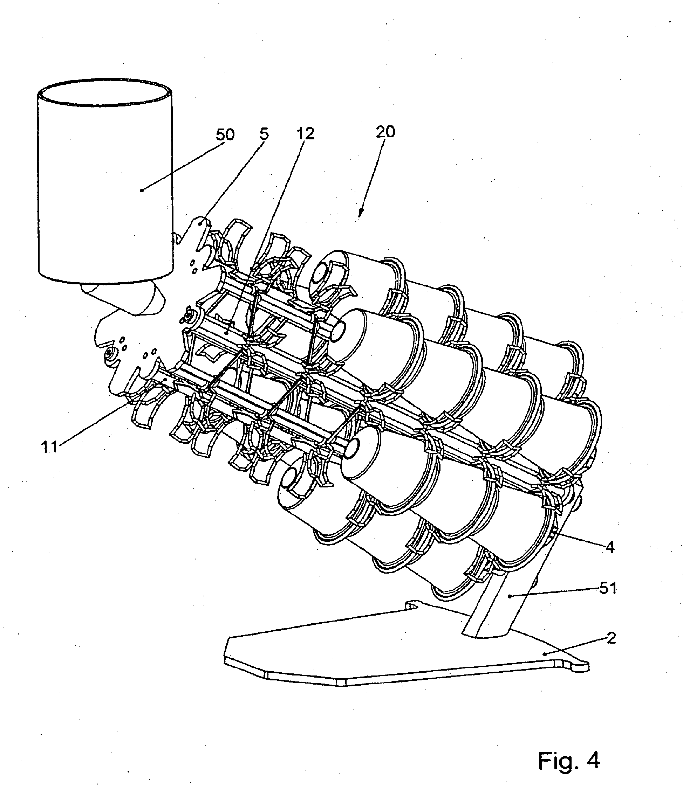

Das Gestell 20 nach Figur 4 unterscheidet sich von den vorher genannten Ausführungsbeispielen lediglich dadurch, dass statt eines liegenden oder stehenden Aufbaus ein halbgeneigter Aufbau gegeben ist, so dass der Haltefuß 51 gemäß Figur 4 schräg gerichtet ist und die Mittelachse 3 ebenfalls schräg ausgerichtet ist. Ansonsten gelten für die gleichen Teile die gleichen Bezugszeichen.

Die Beschreibung der Figur 1 gilt demzufolge auch für die Gestelle 10 und 20 nach den Figuren 2 bis 4, ohne dass weitere Erläuterungen notwendig sind.

Wichtig ist, dass auf einer Grundplatte 2 ein Drehlager 3a angeordnet ist, in dem eine Mittelachse 3 aufgenommen ist, die drehbar ausgebildet ist.

Drehfest mit der Mittelachse 3 ist eine untere Halteplatte 4 verbunden, die über abstandshaltende Verbindungsstangen 11, 12, 13 mit einer oberen Halteplatte 5 drehfest verbunden ist.

Die Verbindungsstangen 11, 12, 13 sind mit Hilfe von Schrauben jeweils mit der zugeordneten Halteplatte 4, 5 verbunden.

Hierdurch ergibt sich ein turmartiges, etwa zylindrisches Drehgestell, welches drehfest mit der Mittelachse 3 verbunden ist und die Mittelachse 3 in dem Drehlager 3a auf der Grundplatte 2 drehbar gelagert ist.

Um nun eine bestimmte Drehlage zu arretieren, ist eine Rastvorrichtung 6 vorgesehen, die im gezeigten Ausführungsbeispiel als magnetische Rastvorrichtung ausgebildet ist.

Hierzu ist fest auf der Grundplatte 2 ein nach oben gerichteter Permanentmagnet 7 angeordnet, dem an der Unterseite der drehbaren Halteplatte 4 geeignete Gegenstücke 8 zugeordnet sind.

Diese Gegenstücke sind entweder entgegengesetzt polarisierte Permanentmagnete oder auch Eisenstücke oder dergleichen mehr, um mit dem ortsfesten Permanentmagneten eine magnetische Rastvorrichtung 6 zu schaffen.

Statt einer magnetischen Rastvorrichtung 6 können auch mechanische Rastvorrichtungen 6 verwendet werden, die mit federbelasteten Kugeln arbeiten (Index-Rast-Vorrichtungen) oder dergleichen mehr.

Statt der Kugelrastungen können auch Federschenkelrastungen verwendet werden, die mit Biegefedern oder dergleichen arbeiten.

Die Gegenstücke 8 sind an vorspringenden Handhaben 9 der Grundplatte 2 angeordnet, so dass man durch Anfassen an der jeweils vorspringenden Handhabe 9 (die gleichen Handhaben 9 sind auch an der oberen Halteplatte 5 angeordnet) den gesamten turmartigen Aufbau in den Pfeilrichtungen 54 hin und her drehen kann und stets dann eine Rastung findet. Weil 6 am Umfang verteilt angeordnete Kapselhalter vorgesehen sind, sind dementsprechend auch 6 Drehlagen arretierbar eingestellt.

Die 3 Verbindungsstangen 11, 12, 13 sind jeweils mit Schrauben 14 oben und unten mit der Halteplatte 4, 5 verbunden. Seitlich neben den Verbindungsstangen 11, 12, 13, die gleichmäßig verteilt am Umfang der Halteplatten 4, 5 angeordnet sind, sind dazwischen liegende, zueinander parallele und paarweise angeordnete Haltestangen 15, 16, 17, 18, 19, 21 vorgesehen.

Die Haltestangen 15, 16 bilden ein erstes Paar für die Halterung eines dort angeordneten Kapselhalters 22, während die Haltestangen 17, 18 ein zweites Paar für die Halterung von Kapselhaltern 22 bildet und die Haltestangen 19, 21 ein drittes Paar für die Halterung von Kapselhaltern 22 bildet.

Der Begriff "Kapselhalter 22" dient zur Kennzeichnung einer Klemmhalterung, die aus zwei sich symmetrisch zueinander ergänzenden Halbfedern 23, 24 besteht.

Die beiden Halbfedern 23, 24 sind etwas radial nach außen geöffnet und schließen sich dann wieder im Bereich einer vorderen Stirnseite, so dass sie eine eingeschobene Kapsel 45 an ihrem Kapselrand 46 umschließen und dort klemmend unter Reibungsschluss halten.

Die Kapsel 45 wird durch teilweises Umgreifen des Kapselrandes 46 klemmend gehalten, ohne dass es weiterer Auflagen bedarf.

An der Oberseite der oberen Halteplatte 5 ist noch ein Aufnahmebehälter 50 angeordnet, der für die Aufnahme von Zucker, Abfällen, Trinkhalmen, Löffeln oder dergleichen geeignet ist. Der Aufnahmebehälter 50 ist bevorzugt drehfest mit der oberen Halteplatte 5 verbunden und kann abnehmbar ausgebildet sein. Die abnehmbare Halterung ist als Magnethalterung ausgebildet.

Die Figuren 2 und 3 zeigen die liegende Anordnung des Gestells 1 nach Figur 1, das als liegendes Gestell 10 ausgebildet ist und das deshalb um eine horizontale Mittelachse 3 in den Pfeilrichtungen 54 drehbar ausgebildet ist.

Die Gestelle 1, 10, 20 sind entweder auf der Grundplatte 2 oder einem zugeordneten Haltefuß 51 drehbar aufgenommen.

Auf eine solche einseitige Drehlagerung ist die Erfindung jedoch nicht beschränkt. Es kann auch vorgesehen sein, dass die Mittelachse 3 zwischen zwei einander gegenüberliegenden Drehlagern aufgenommen ist oder dass es sich nicht um eine drehbare Halterung handelt, sondern dass die Mittelachse 3 drehfest mit der Grundplatte 2 verbunden ist.

Die Figur 1 zeigt auch, dass insgesamt 7 übereinander liegende Klemmebenen vorgesehen sind, wobei der einfacheren Beschreibung wegen lediglich die untersten 3 Klemmebenen mit den Bezugszeichen 55, 56, 57 bezeichnet sind. Es kann selbstverständlich jede andere Anzahl von übereinander liegenden Klemmebenen 55, 56, 57 verwendet werden, und im einfachsten Fall reicht es aus, lediglich die unterste Klemmebene 55 zu verwenden und die anderen darüber liegenden Klemmebenen entfallen zu lassen.

In diesem einfachen Fall, bei der Verwendung lediglich einer unteren Klemmebene 55, sind am Umfang insgesamt 6 Kapselhalter 22 verteilt vorgesehen. Nachdem aber jeder Klemmebene 55-57 identische Kapselhalter 22 zugeordnet sind, wird das Bezugszeichen 22 allgemein für jeden beliebigen Kapselhalter im Bereich der Gestelle 1, 10, 20 verwendet.

Es reicht deshalb aus, einen einzelnen Kapselhalter 22 zu beschreiben, weil alle Kapselhalter 22 gleich ausgebildet sind.

Jeder Kapselhalter 22 besteht gemäß der Darstellung in Figur 1 aus zwei einander gegenüber liegenden Federbügeln 25, 26, die bevorzugt identisch ausgebildet sind. Dies bedeutet, sie sind nicht spiegelsymmetrisch ausgebildet, sondern identisch, was bedeutet, dass der eine Federbügel in der einen Montagelage und der andere Federbügel - als identische Ausführung um 180° verdreht - sich mit dem anderen Federbügel 25 zu einem Kapselhalter 22 ergänzt.

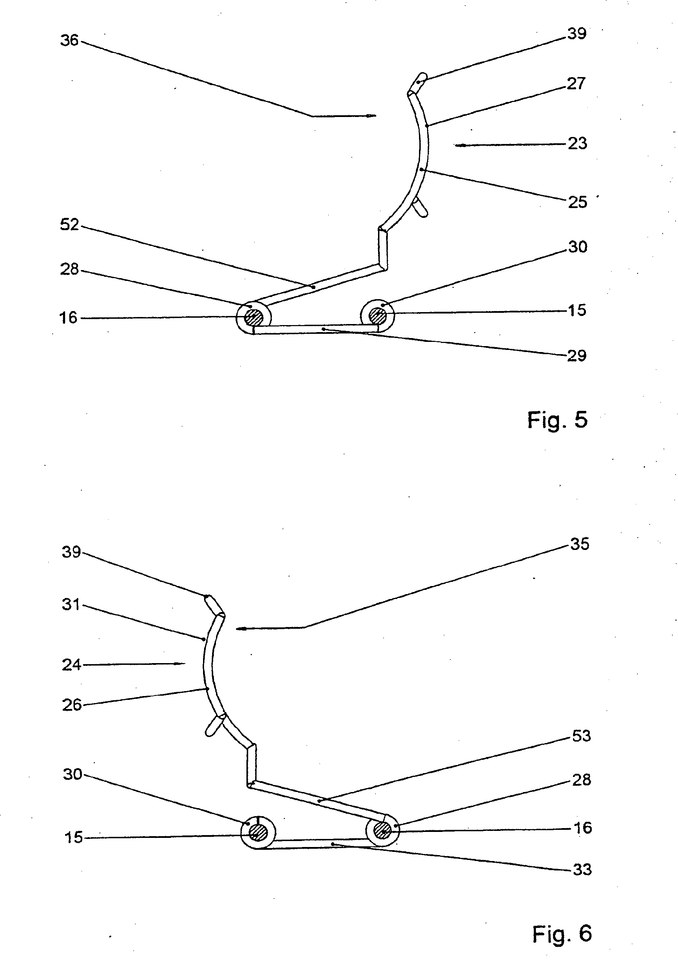

In den Figuren 5 und 6 ist die Draufsicht auf jeweils einen Federbügel 25, 26 dargestellt.

Hierbei ist erkennbar, dass ausgehend von einer vorderen Einführschräge 37 zunächst eine halbrund abgebogene Bogenkurve 27, 31 vorhanden ist und die Bogenkurve sozusagen das Aufnahmemaul des Kapselhalters 22 bildet, wobei die Bogenkurve in ihrer Formgebung etwa dem Radius des Kapselrandes 46 einer dort zur haltenden Kapsel 45 angepasst ist.

Die jeweilige Bogenkurve 27, 31 geht über eine Abwinklung in einen etwa gerade ausgebildeten Federschenkel 52, 53 über, und dieser umschlingt mit einer ersten Federwicklung 28 reibschlüssig die eine Haltestange 16 gemäß Figur 5.

Der besseren zeichnerischen Übersichtlichkeit halber werden die Federbügel 25, 26 gemäß den Figuren 5 und 6 mit ihren Halbfedern 23, 24 nur als Striche dargestellt, obwohl es sich um rund profilierte Federdrahtelemente handelt.

Aus diesem Grund ist auch nur zeichnerisch angedeutet, dass die Federwicklung 28 reibschlüssig die Haltestange 16 umgreift.

Von der Federwicklung 28 ausgehend erstreckt sich ein etwa gerade ausgebildeter Verbindungsschenkel 29 zu der zweiten, parallel hierzu angeordneten Haltestange 15 gemäß Figur 5 und bildet dort eine zweite Federwicklung 30, die sich ebenfalls reibschlüssig um den Umfang der Haltestange 15 legt.

Damit ist die in Figur 5 dargestellte Halbfeder 23 in Pfeilrichtung 36 federnd ausgebildet, und die gesamte vordere Seite dieser Halbfeder 23 kann in Pfeilrichtung 36 geöffnet werden, und zwar entgegen der Federkraft der Bogenkurve 27 und des Federschenkels 52, wodurch eine sehr große haltende Federkraft erzeugt wird.

Die gleiche Darstellung gilt auch für die zweite Halbfeder 24 nach Figur 6. Dort ist erkennbar, dass die zweite Halbfeder 24 in genau gleicher Weise, jedoch um 180° zur Figur 5 verdreht, ausgebildet ist.

Die Halbfeder 24 weist einen Federbügel 26 auf, der eine Bogenkurve 31 bildet, der in einen etwa gerade ausgerichteten Federschenkel 53 übergeht, der sich mit einer ersten Federwicklung 32 um die Haltestange 15 herum schlingt und dort über einen relativ gerade ausgebildeten Verbindungsschenkel 33 in die benachbarte Federwicklung 34 übergeht, die sich reibschlüssig an den Außenumfang der anderen Haltestange 16 anlegt.

Damit kann die zweite Halbfeder 24 in Pfeilrichtung 35 entgegen der Kraft der Federschenkel der Bogenkurve 31 und des Federschenkels 53 in Pfeilrichtung 35 herausgebogen werden.

Um sich nun vorzustellen, wie ein solcher Kapselhalter 22 aussieht, muss man sich vorstellen, dass die beiden Darstellungen der Figuren 5 und 6 deckungsgleich auf der Papierebene der Zeichnung übereinander gebracht werden, so dass sich die beiden Halbfedern 23, 24 genau übereinander legen und parallel zueinander angeordnet sind, so dass sich die Federwicklung 30 der oberen Halbfeder 23 mit der darunter liegenden Federwicklung 32 der darunter liegenden Halbfeder 24 berührt und ebenso die Federwicklung 28 der oberen Halbfeder 23 sich mit der Federwicklung 34 der unteren Halbfeder 24 berührt.

Auf diese Weise wird der Kapselhalter 22 aus zwei sich gegenseitig ergänzenden und ein offenes Klemmmaul ergebenden Halbfedern 23, 24 gebildet.

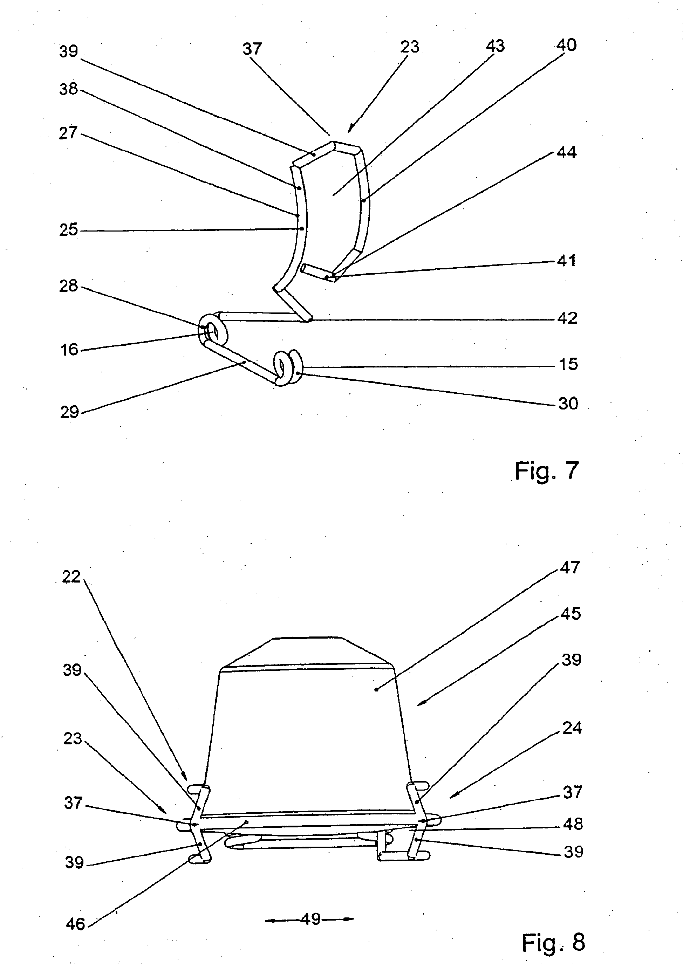

Eine solche Halbfeder 23 nach Figur 5 ist in Figur 7 in Seitenansicht dargestellt.

Hierbei ist erkennbar, dass die Halbfeder 23 aus einem etwa abgebogenen, vorderen U-förmig gebogenen Bügel besteht, der aus einem oberen Schenkel 38 gebildet ist, der etwa halbrund geformt ist und sich mit seinem Radius an den Radius des Kapselrandes 46 anpasst, wobei der obere Schenkel 38 über eine Abbiegung in einen Stirnschenkel 39 übergeht, in dem eine Einführschräge 37 angeformt ist, welche wiederum in einen unteren Schenkel 40 übergeht, der etwa parallel und in gleicher Weise gebogen wie der obere Schenkel 38 ausgebildet ist, wobei der untere Schenkel 40 über eine Abbiegung 44 in ein freies nach oben gerichtetes Ende 41 übergeht.

Der obere Schenkel 38 geht über eine U-förmig abgebogene Abbiegung 42 in den vorher beschriebenen etwa gerade ausgebildeten Federschenkel 52 über, der dann - lediglich in Figur 7 zeichnerisch angedeutet - in die erste Federwicklung 28 übergeht, die über den geraden Verbindungsschenkel 29 mit der zweiten Federwicklung 30 verbunden ist.

Aus der Darstellung aus Figur 7 ergibt sich die große Durchmesser-Variabilität für zu klemmende Kapseln und die hohe Federkraft, die sich durch eine solche Halbfeder 23 ergibt, denn die Federkraft der Halbfeder ergibt sich durch die Abbiegung 42 und die Länge des Federschenkels 53, der seinerseits in die Federwicklung 28 einläuft.

Die Figur 8 zeigt, dass die Kapsel 45 aus einem Kapselkörper 47 mit einem umlaufenden Kapselrand 46 besteht, der durch die Aufnahmeöffnung 43 in den U-förmigen Bügel der jeweiligen Halbfeder 23, 24 hindurch greift und dort klemmend gehalten ist.

Er wird demgemäß sowohl an der Oberseite als auch an der Unterseite klemmend aufgenommen, und dadurch ist eine Klemmaufnahme 48 gebildet, die in den Pfeilrichtungen 49 mit großer Federkraft spreizbar ist und die andererseits mit großer Federkraft die Kapsel 45 mit dem Kapselrand 46 beidseitig klemmend umschließt.

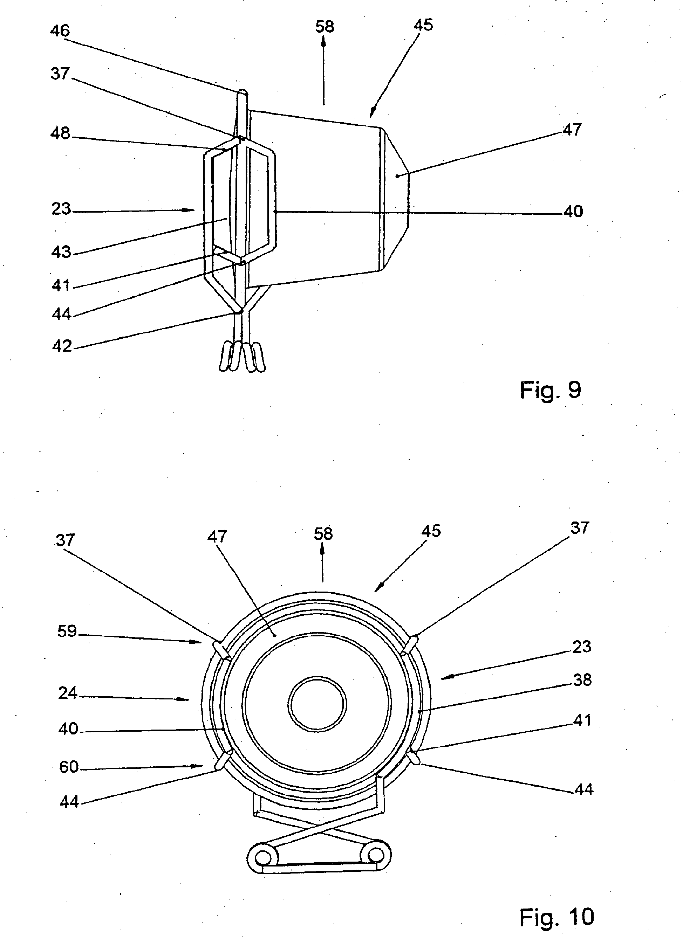

Dies ist auch in Figur 9 angedeutet, wo erkennbar ist, dass sich die Aufnahmeöffnung 43 an der jeweiligen Halbfeder 23, 24 über einen Umfangswinkel von z. B. 250 bis 230° des Kapselrandes 46 erstreckt, so dass die Kapsel nicht mehr ohne Öffnung der Klemmaufnahme 48 in Pfeilrichtung 58 entnommen werden kann.

Hierbei ergibt sich der Vorteil, dass man den freistehenden, nach vorne herausstehenden Kapselrand 46 nach Figur 9 mit der Hand erfassen kann, ohne mit dem Kapselhalter 22 und dessen Halbfedern 23, 24 in Berührung zu kommen. Damit ist eine leichte Zugänglichkeit der dort klemmend aufgenommenen Kapsel 45 gewährleistet.

Dies zeigt auch die Figur 10, die eine Draufsicht auf die Anordnung nach Figur 9 darstellt, und es ist erkennbar, dass das freie abgebogene Ende 41 jeder Halbfeder 23, 24 sich auch noch am Kapselrand 46 klemmend anlegt, so dass die Klemmaufnahme 48 des jeweiligen Kapselhalters 22 durch zwei in gegenseitigem Abstand und parallel zueinander angeordneten Klemmpositionen 59, 60 gemäß Figur 10 ausgebildet ist.

Mit der gegebenen technischen Lehre ergibt sich der wesentliche Vorteil, dass eine Vielzahl von fein aufgebauten, wenig Raum einnehmenden Kapselhaltern 22 vorgeschlagen werden, wobei jeder Kapselhalter aus symmetrisch zueinander sich ergänzenden Halbfedern 23, 24 besteht, die jeweils eine Klemmaufnahme 48 für eine dort federnd gehaltene Kapsel 45 bilden.

Auf kleinstem Raum können deshalb übereinander und nebeneinander liegend eine Vielzahl von Kapseln 45 aufgenommen und klemmend gehalten werden.

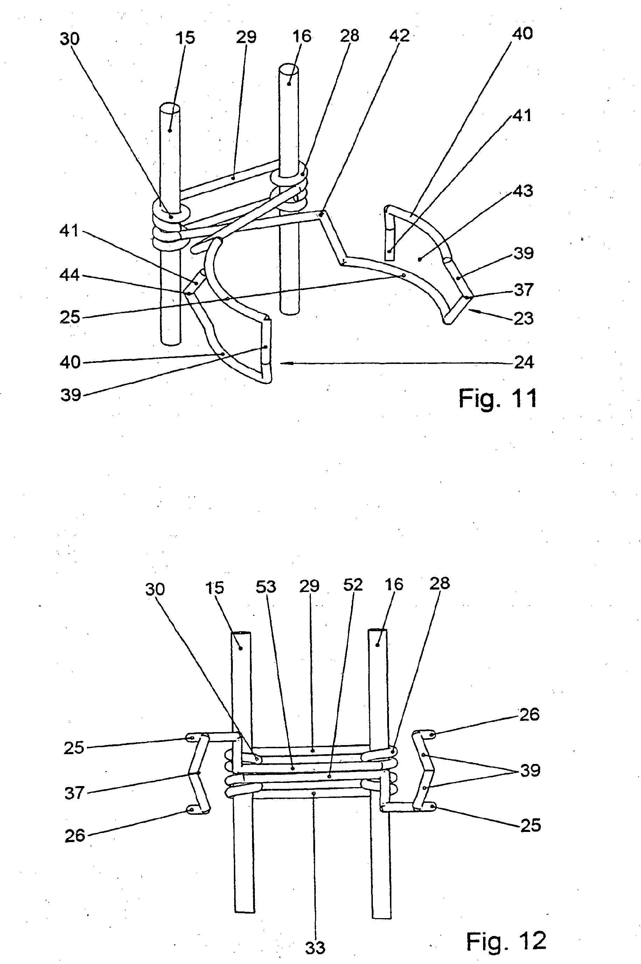

Die Figur 11 zeigt die perspektivische Ansicht einer Klemmhalterung bei der die zwei Federwicklungen 28, 30 jeweils mit mehreren Windungen die Haltestangen 15, 16 umschlingen. Dadurch ergibt sich ein großes Klemmspiel der beiden federnd gegeneinander gespannten Halbfedern 23, 24. Die Federschenkel 52, 53 überkreuzen sich gemäß Figur 11 und stützen sich somit gegenseitig ab. Damit wird eine verkantungsfreie Klemmung einer Kapsel erreicht, deren Rand jeweils in die Einführschräge 37 der beiden Klemmaufnahmen, gebildet durch die beiden Halbfedern 23, 24, geschoben wird.

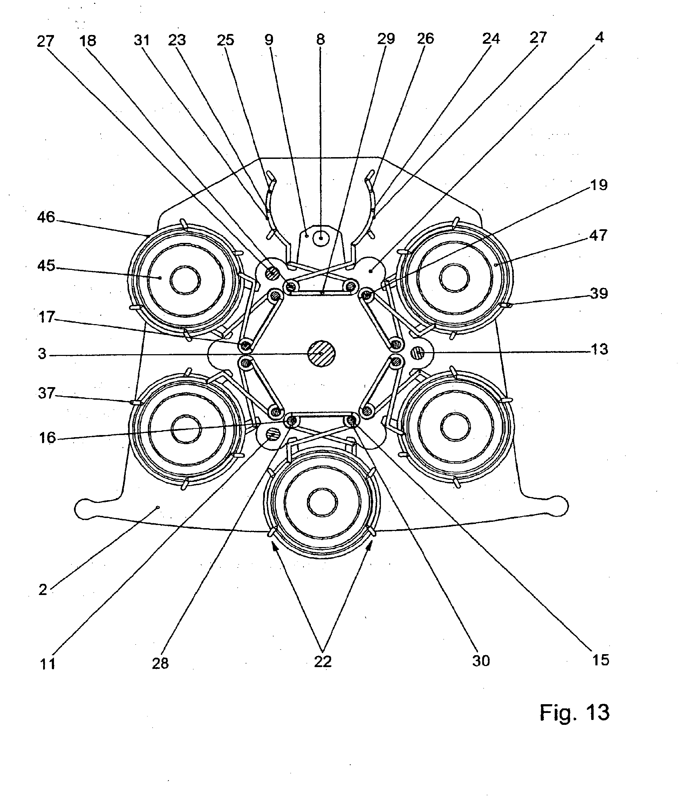

Die Figur 13 zeigt einen Horizontalschnitt durch ein Gestell 1 nach Figur 1. Die gleichen Teile sind mit den gleichen Bezugszeichen versehen.

**Zeichnungslegende**

| | | | |
|---|---|---|---|
| | | 31 | Bogenkurve |
| 1 | Gestell | 32 | Federwicklung |
| 2 | Grundplatte | 33 | Verbindungsschenkel |
| 3 | Mittelachse 3a Drehlager | 34 | Federwicklung |
| 4 | Halteplatte unten | 35 | Pfeilrichtung |
| 5 | Halteplatte oben | 36 | Pfeilrichtung |
| 6 | Rastvorrichtung | 37 | Einführschräge |
| 7 | Permanentmagnet | 38 | oberer Schenkel |
| 8 | Gegenstück | 39 | Stirnschenkel |
| 9 | Handhabe | 40 | unterer Schenkel |
| 10 | Gestell | 41 | freies Ende |
| 11 | Verbindungsstange | 42 | Abbiegung |
| 12 | Verbindungsstange | 43 | Aufnahmeöffnung |
| 13 | Verbindungsstange | 44 | Abbiegung |
| 14 | Schraube | 45 | Kapsel |
| 15 | Haltestange | 46 | Kapselrand |
| 16 | Haltestange | 47 | Kapselkörper |
| 17 | Haltestange | 48 | Klemmaufnahme |
| 18 | Haltestange | 49 | Pfeilrichtung |
| 19 | Haltestange | 50 | Aufnahmebehälter |
| 20 | Gestell | 51 | Haltefuß |
| 21 | Haltestange | 52 | Federschenkel |
| 22 | Kapselhalter | 53 | Federschenkel |
| 23 | Halbfeder | 54 | Pfeilrichtung |
| 24 | Halbfeder | 55 | Klemmebene |
| 25 | Federbügel | 56 | Klemmebene |
| 26 | Federbügel | 57 | Klemmebene |
| 27 | Bogenkurve | 58 | Pfeilrichtung |
| 28 | Federwicklung | 59 | Klemmposition |
| 29 | Verbindungsschenkel | 60 | Klemmposition |
| 30 | Federwicklung | | |

## Patentansprüche

1. Halter für Kapseln, insbesondere für Kaffee-, Milch- oder Zuckerkapseln, die in einem Gestell (1, 10, 20) gehalten und dort leicht entnehmbar sind, wobei jeder Kapsel (45) ein Kapselhalter (22) zugeordnet ist, der aus mindestens einer Feder (23, 24) besteht, die eine Klemmaufnahme (48) bildet, in welche die zu haltende Kapsel (45) mit ihrem Rand (46) einschiebbar und dort klemmend gehalten ist, **dadurch gekennzeichnet, dass** die Kapselhalter (22) an einem Gestell (1, 10, 20) mit daran befestigten Haltestangen (15-19, 21) befestigt sind, die in einem vertikalen Aufbau des Gestells (1, 10, 20) angeordnet sind, und dass die Haltestangen (15-19, 21) paarweise angeordnet sind und jede Halbfeder (23, 24) sich sowohl um die eine Haltestange als auch um die andere Haltestange herum schlingt.

2. Halter nach Anspruch 1, **dadurch gekennzeichnet, dass** die Haltestangen (15-19; 21) zwischen zwei im Abstand voneinander angeordneten und parallel zueinander ausgebildeten Halteplatten (4, 5) eingesetzt sind.

3. Halter nach Anspruch 1 oder 2, **dadurch gekennzeichnet, dass** die Halteplatten (15-19, 21) gegenseitig auf Abstand durch dazwischen angeordnete Verbindungsstangen (11-13) gehalten sind.

4. Halter nach einem der Ansprüche 1 bis 3, **dadurch gekennzeichnet, dass** die Kapselhalter (22) gleichmäßig am Umfang des Gestells (1, 10, 20) in unterschiedlichen Ebenen angeordnet sind.

5. Halter nach einem der Ansprüche 1 bis 4, **dadurch gekennzeichnet, dass** jeder Kapselhalter (22) aus den 2 sich symmetrisch zueinander ergänzenden Halbfedern (23, 24) besteht, die eine stirnseitig offene Klemmaufnahme (48) bilden, in welche der umlaufende Rand (46) einer Kapsel (45) eingeschoben und dort klemmend gehalten ist.

6. Halter nach einem der Ansprüche 1 bis 5, **dadurch gekennzeichnet, dass** das die Kapselhalter (22) aufnehmende Gestell (1, 10, 20) auf einer Mittelachse (3) gelagert ist, die mindestens einseitig drehbar auf einer Grundplatte (2) befestigt ist.

7. Halter nach einem der Ansprüche 1 bis 6, **dadurch gekennzeichnet, dass** dem drehbaren Gestell (1, 10, 20) eine die Drehlage arretierende Rastung (6) zugeordnet ist.

8. Halter nach einem der Ansprüche 1 bis 7, **dadurch gekennzeichnet, dass** jeder Federbügel (25, 26) ausgehend von einer vorderen Einführschräge (37) eine halbrund abgebogene Bogenkurve (27, 31) aufweist, welche die Einführöffnung des Kapselhalters (22) bildet, dass die Bogenkurve (27, 31) in ihrer Formgebung etwa dem Radius des Kapselrandes (46) einer dort zur haltenden Kapsel (45) angepasst ist, und dass die jeweilige Bogenkurve (27, 31) über eine Abwinklung in einen etwa gerade ausgebildeten Federschenkel (52, 53) über geht, der mit einer ersten Federwicklung (28) reibschlüssig die eine Haltestange (16) umschlingt.

9. Halter nach Anspruch 8, **dadurch gekennzeichnet, dass** sich der Federbügel (25, 26) ausgehend von der ersten Federwicklung (28) über einen etwa gerade ausgebildeten Verbindungsschenkel (29) zu einen zweiten, parallel hierzu angeordneten Haltestange (15) erstreckt und dort eine zweite Federwicklung (30) ausbildet, die sich reibschlüssig um den Umfang der Haltestange (15) legt.

10. Halter nach einem der Ansprüche 8 oder 9, **dadurch gekennzeichnet, dass** der vordere Teil der Halbfeder (23) aus einem U-förmig gebogenen Bügel besteht, der aus einem oberen Schenkel (38) gebildet ist, der etwa halbrund geformt ist und sich mit seinem Radius an den Radius des Kapselrandes (46) anpasst, wobei der obere Schenkel (38) über eine Abbiegung in einen Stirnschenkel (39) übergeht, in dem die Einführschräge (37) angeformt ist, welche in einen unteren Schenkel (40) übergeht, der etwa parallel und in gleicher Weise gebogen wie der obere Schenkel (38) ausgebildet ist, wobei der untere Schenkel (40) über eine Abbiegung (44) in ein freies nach oben gerichtetes Ende (41) übergeht.

11. Halter nach einem der Ansprüche 8 bis 10, **dadurch gekennzeichnet, dass** sich das freie abgebogene Ende (41) jeder Halbfeder (23, 24) am Kapselrand (46) klemmend anlegt, so dass die Klemmaufnahme (48) des jeweiligen Kapselhalters (22) durch zwei in gegenseitigem Abstand und parallel zueinander angeordneten Klemmpositionen (59, 60) ausgebildet ist.

## Claims

1. Holder for pots, in particular for coffee, milk or sugar pots, which are held in a stand (1, 10, 20) from which they can easily be extracted, wherein each pot (45) has an associated pot holder (22) which consists of at least one spring (23, 24) which forms a clamping retainer (48) into which the pot (45) to be held is insertable by its rim (46) and held clamped therein, **characterised in that** the pot holders (22) are fastened to a stand (1, 10, 20) with holding rods (15-19, 21) which are fastened thereto and arranged in a vertical structure of the stand (1, 10, 20), and **in that** the holding rods (15-19, 21) are arranged in pairs and each half spring (23, 24) is looped around both the first holding rod and the other holding rod.

2. Holder according to claim 1, **characterised in that** the holding rods (15-19; 21) are inserted between two holding plates (4, 5) which are arranged a distance from one another and formed parallel to one another.

3. Holder according to claim 1 or 2, **characterised in that** the holding plates (15-19, 21) are held a distance apart from one another by connecting rods (11-13) arranged between them.

4. Holder according to one of claims 1 to 3, **characterised in that** the pot holders (22) are arranged uniformly around the circumference of the stand (1, 10, 20) in different levels.

5. Holder according to one of claims 1 to 4, **characterised in that** each pot holder (22) consists of the two symmetrically complementary half springs (23, 24) which form a clamping retainer (48) which is open at the end and into which the circumferential rim (46) of a pot (45) is inserted and held and clamped therein.

6. Holder according to one of claims 1 to 5, **characterised in that** the stand (1, 10, 20) receiving the pot holders (22) is mounted on a central shaft (3) which on at least one side is fastened pivotally on a base plate (2).

7. Holder according to one of claims 1 to 6, **characterised in that** the rotatable stand (1, 10, 20) has an associated locking device (6) locking the rotational position.

8. Holder according to one of claims 1 to 7, **characterised in that** starting from a front angled insertion guide (37) each spring element (25, 26) exhibits an arc (27, 31) which is bent in a semi-circle and forms the insertion opening of the pot holder (22), **in that** in its shape the arc (27, 31) is roughly matched to the radius of the rim (46) of a pot (45) to be held therein, and **in that** the respective arc (27, 31) runs through an angled portion into a roughly straight spring section (52, 53) which with a first spring turn (28) is looped around a first holding rod (16) in frictional engagement therewith.

9. Holder according to claim 8, **characterised in that** starting from the first spring turn (28) the spring element (25, 26) extends through a roughly straight connecting section (29) to a second holding rod (15) arranged parallel to this and there forms a second spring turn (30) which runs around the circumference of the holding rod (15) in frictional engagement therewith.

10. Holder according to one of claims 8 or 9, **characterised in that** the front part of the half spring (23) consists of a bracket which is bent in a U-shape and formed of an upper section (38) which is roughly semi-circular in shape and in its radius is matched to the radius of the rim (46) of the pot, wherein the upper section (38) runs through a bend into an end section (39) in which the angled insertion guide (37) is formed which runs into a lower section (40) which is formed roughly parallel and bent in the same way as the upper section (38), wherein the lower section (40) runs through a bend (44) into an end (41) which points freely upwards.

11. Holder according to one of claims 8 to 10, **characterised in that** the free bent end (41) of each half spring (23, 24) bears on and clamps the rim (46) of the pot so that the clamping retainer (48) of the respective pot holder (22) is formed by two clamping elements (59, 60) which are spaced a distance apart from one another and parallel to one another.

## Revendications

1. Support pour capsules, en particulier pour capsules de café, de lait ou de sucre, qui sont contenues dans une structure (1, 10, 20) et peuvent être facilement enlevées de celle-ci, étant précisé qu'à chaque capsule (45) est associé un porte-capsule (22) qui se compose d'au moins un ressort (23, 24) dans lequel la capsule (45) à supporter est apte à être glissée avec son bord (46) et est retenue par serrage à cet endroit, **caractérisé en ce que** les porte-capsule (22) sont fixés à une structure (1, 10, 20) à laquelle sont fixées des barres de support (15-19, 21) disposées dans une construction verticale de la structure (1, 10, 20), **et en ce que** les barres de support (15-19, 21) sont disposées par paires et chaque moitié de ressort (23, 24) s'enroule à la fois autour d'une barre de support et autour de l'autre barre de support.

2. Support selon la revendication 1, **caractérisé en ce que** les barres de support (15-19 ; 21) sont placées entre deux plaques de support (4, 5) espacées et parallèles.

3. Support selon la revendication 1 ou 2, **caractérisé en ce que** les plaques de support (15-19, 21) sont espacées grâce à des barres de liaison (11-13) disposées entre elles.

4. Support selon l'une des revendications 1 à 3, **caractérisé en ce que** les porte-capsule (22) sont disposés uniformément sur la circonférence de la structure (1, 10, 20) dans différents plans.

5. Support selon l'une des revendications 1 à 4, **caractérisé en ce que** chaque porte-capsule (22) se compose des 2 moitiés de ressort (23, 24) qui se complètent symétriquement et qui forment un logement à serrage (48), ouvert côté frontal, dans lequel le bord circonférentiel (46) d'une capsule (45) est glissé et retenu par serrage.

6. Support selon l'une des revendications 1 à 5, **caractérisé en ce que** la structure (1, 10, 20) qui reçoit les porte-capsule (22) est montée sur un axe central (3) qui est fixé en rotation au moins unilatéralement sur un socle (2).

7. Support selon l'une des revendications 1 à 6, **caractérisé en ce qu'**un crantage (6) qui arrête la position de rotation est associé à la structure rotative (1, 10, 20).

8. Support selon l'une des revendications 1 à 7, **caractérisé en ce que** chaque bride à ressort (25, 26), à partir d'un biseau d'introduction avant (37), présente une courbe semi-circulaire (27, 31) qui forme l'ouverture d'introduction du porte-capsule (22), **en ce que** la forme de la courbe (27, 31) est à peu près adaptée au rayon du bord (46) d'une capsule (45) à retenir à cet endroit, et **en ce que** chaque courbe (27, 31) se prolonge, par l'intermédiaire d'une partie coudée, par une branche de ressort (52, 53) à peu près droite qui entoure par friction une barre de support (16) avec un premier enroulement de ressort (28).

9. Support selon la revendication 8, **caractérisé en ce que** la bride à ressort (25, 26), à partir du premier enroulement (28), s'étend avec une branche de liaison (29) à peu près droite jusqu'à une seconde barre de support (15) parallèle à celui-ci, et forme à cet endroit un second enroulement de ressort (30), qui s'applique par friction autour de la circonférence de la barre de support (15).

10. Support selon l'une des revendications 8 ou 9, **caractérisé en ce que** la partie avant de la moitié de ressort (23) se compose d'une bride en U qui est formée à partir d'une branche supérieure (38) qui est à peu près semi-circulaire et dont le rayon s'adapte au rayon du bord de capsule (46), étant précisé que la branche supérieure (38) se prolonge, par l'intermédiaire d'une partie coudée, par une branche frontale (39) dans laquelle est rapporté le biseau d'introduction (37), lequel se prolonge par une branche inférieure (40) qui est à peu près parallèle et courbe comme la branche supérieure (38), étant précisé que la branche inférieure (40) se prolonge, par l'intermédiaire d'une partie coudée (44), par une extrémité libre (41) dirigée vers le haut.

11. Support selon l'une des revendications 8 à 10, **caractérisé en ce que** l'extrémité libre coudée (41) de chaque moitié de ressort (23, 24) s'applique par serrage contre le bord de capsule (46), de sorte que le logement à serrage (48) de chaque porte-capsule (22) est formé par deux positions de serrage (59, 60) espacées mutuellement et parallèles.
